# EUROPEAN PATENT SPECIFICATION

(11) **EP 3 974 139 B1**
(45) Date of publication and mention of the grant of the patent: **18.09.2024**
(21) Application number: 21159820.6
(22) Date of filing: 01.03.2021
(51) Int. Cl.: B29B 9/06, B29B 9/12, B29B 9/16, B29B 7/00, B29B 7/38, B29B 7/60, B29B 7/74, B29B 7/88, B29B 17/00, B29B 17/02, B29C 48/00, B29C 48/04, B29C 48/05, B29C 48/275, B29C 48/345, B29C 48/69, B29B 7/66, B29B 7/82, B29B 7/86, B29B 17/04, B29K 67/00, B29L 31/00

(54) **APPARATUS AND RELATED METHOD FOR RECYCLING AND PELLETIZING OF BOTTLE FLAKES**
VORRICHTUNG UND DARAUF BEZOGENES VERFAHREN ZUR WIEDERVERWERTUNG UND PELLETIERUNG VON FLASCHENMAHLGUT
APPAREIL ET PROCÉDÉ ASSOCIÉ POUR LE RECYCLAGE ET LA GRANULATION DE FLOCONS DE BOUTEILLE

(30) Priority: 19.11.2020 CN 202011301452; 23.09.2020 CN 202011006870; 23.09.2020 CN 202022109092 U; 19.11.2020 CN 202022680492 U
(43) Date of publication of application: 30.03.2022
(73) Proprietor: Zhengzhou Zhongyuan Drying Technique and Engineering Co., Ltd., Zhengzhou, Henan 450001 (CN)
(72) Inventor: SUN, Weiguang, Henan 450001 (CN); WANG, Zhanjun, Henan 450001 (CN); ZHANG, Quansheng, Henan 450001 (CN); LIU, Shuangying, Henan 450001 (CN)
(74) Representative: dompatent von Kreisler Selting Werner - Partnerschaft von Patent- und Rechtsanwälten mbB

(56) References cited:
- CN-A- 101 905 494
- CN-A- 112 026 046
- CN-U- 212 312 435
- JP-A- 2002 161 166
- JP-A- 2002 307 436
- O'TOOLE K: "RECYCLING A PROFITABLE BUSINESS", EUROPEAN PLASTICS NEWS, EMAP BUSINESS PUBLICATION, LONDON, GB, vol. 18, no. 5, 1 June 1991 (1991-06-01), pages 42 - 44, 47, XP000243348, ISSN: 0306-3534
- WIEDMANN W ET AL: "WIRTSCHAFTLICHER EINSATZ VON ZWEIWELLENEXTRUDERN BEIM RECYCLING", KUNSTSTOFFE, CARL HANSER VERLAG, MUNCHEN, DE, vol. 82, no. 10, 1 October 1992 (1992-10-01), pages 934 - 938, XP000310147, ISSN: 0023-5563

## Description

### Introduction

A high-quality apparatus and process for the recycling and pelletizing of bottle flakes.

### Technical field

The invention relates to the technical field of bottle flakes recycling and pelletizing, specifically to a high-quality apparatus and process for bottle flakes recycling and pelletizing.

### Technical Background

The existing processes for bottle flakes recycling and pelletizing differ among the suppliers. The existing process is that after the initial sorting, smash, wash, drying, the recycled bottle flakes enter the screw extruder for melting and pelletizing. The said bottle flakes are 3A grade (namely the PET drinks bottles from towns, after initial sorting, smash, wash and drying treatment, named as 3A grade bottle flakes). The PVC content of this kind of bottle flakes is 90-100 mg/Kg, the polyolefin content about 180-200 mg/kg, water content of 1%, powder content 1900-2000 mg/kg, and other dust (sand, metal) about 280-300 mg/kg.

There is much dust inside the bottle flakes, which can influence the downstream pelletizing and products performance index. In addition, the equipment under this process doesn't have high demand for the granular, so most products produced can only be used to make low quality products. What's more, the batch yield of the existing bottle flakes recycling and pelletizing is not big, normally ranging from several tons to 40 tons. With the recycled bottle flakes as raw material, its quality is not same. The small batch production will lead to the instability at different time, uneven molecular chain length, and other problems. So, it cannot provide the material with stable quality and quantity, and it brings too much inconvenience for the stable use of the downstream customers. Generally, the existing process has the following main problems: firstly, the chips and bottle flakes produced have low performance index and quality; secondly, for different batch products, their weights are not the same, no big batch stale supply; thirdly, with the recycled bottle flakes as raw material, so its quality is not same, for different batches, the granular produced differ in the parameters, due to this difference, the products performance index is not continuous, stable and different, even under standard, for example, when making filament, may have broken filament and break filament, when dyeing, may lead to difficulty in dyeing and nonuniform dyeing. CN 101905494 B discloses a process for producing a regenerated polyester chip by using a regenerated bottle chip and a device thereof. The device comprises a chip bin, a centrifugal dryer, an underwater granulator, a No.2 filter, a No.1 filter, a screw extruder, a pre-spinning bin, a feeding winch and a high-speed mixer in turn, wherein the high-speed mixer is provided with a metering tank; the metering tank is provided with the bottle chip bin; the bottle chip bin is provided with a cyclone separator; a metering pump is arranged between the No.1 filter and the No.2 filter; a casting band head is arranged on the No.2 filter; the centrifugal dryer is connected with a vibrating screen and a Roots blower in turn; and the cyclone separator is connected with a No.2 large rotary outlet air supply pipeline. JP 20021611166 A refers to recycle method for providing a polyester resin composition capable of manufacturing a bottle of an equal quality again from a used PET bottle (bottle to bottle). For that, a substantially completely cleaned waste PET bottle flake is mixed with a monomer PEN flake or a substantially completely cleaned waste PEN flake in a predetermined ratio. The mixed flake, which is dried to 50-80 ppm by a reduced-pressure vacuum drying, is kneaded in a twin kneading extruder heated to 250-280 °C filled with dried inert gas with addition of a condensation agent. Although hydrolysis occurs due to incomplete drying of both PET and PEN, two benzene nuclei possessed by a dicarboxylic acid of the PEN produced by the hydrolysis causes a strong induced linkage aiding an ester linkage by the action of the condensation catalyst to link between the PETs prior to melting, thereby preventing reduction of entire molecular weight and recovering an IV value.

### Invention content

The invention aims to solve the existing problems and provide an apparatus and process for high-quality bottle flakes recycling and pelletizing. The invention can enhance the product quality and the performance stability and continuity of the products, and improve the environment of the bottle flakes recycling and pelletizing.

On the one hand, the invention provides an apparatus according to claim 1 for high-quality bottle flakes recycling and pelletizing, including the bottle flakes feeding apparatus and a screw extrusion pelletizing apparatus. With 3A grade bottle flakes as raw material, there is a dust removing and drying apparatus between the bottle flakes feeding apparatus and screw extrusion pelletizing apparatus. The said dust removing and drying apparatus includes an eddy current separator, material sorter, fluid bed, round vibrating sieve and drying reaction tower. The said screw extrusion pelletizing apparatus connects a material mixing hopper at an output end.

The said fluid bed pre-heats the bottle flakes to remove their surface moisture and dry the sand on the surface of the bottle flakes, which makes it easier for the round vibrating sieve to sieve out the residual sand. The drying tower allows further drying of the bottle flakes and completely removes the moisture on the surface and inside the bottle flakes, which can avoid e bubbles and even breaking of the inside or on the surface of the granule during the die head and pelletizing processes. Thus, high quality of the granules and its uniformity is achieved.

Further, the said bottle flakes feeding apparatus includes a crane, a bottle flakes feeding hopper and a bottle flakes storage hopper. The crane is on the upside of the bottle flakes feeding hopper. The material outlet of said bottle flakes feeding hopper connects with the material inlet of the said bottle flakes storage hopper through material pipe.

Further, the said bottle flakes recycling and pelletizing apparatus, is characterized in that the said screw extrusion pelletizing apparatus includes the screw extruder, two-stage melt filter, die head, sink, pelletizer, dryer and the vibrating sieve, the material outlet of the said screw extruder connects with the material inlet of the said two stage melt filter, the material outlet of the said two-stage melt filter connects with the material inlet of the die head, the material inlet of the said die head connects with the material inlet of the said pelletizer through said sink, the material outlet of the said pelletizer connects with the material inlet of the dryer, the material outlet of the said dryer connects with the material inlet of the said vibrating sieve, the material outlet of the said vibrating sieve connects with the said mixing hopper through material pipe.

Further, the said multiple-hopper material mixing apparatus includes material mixing hoppers. There is material inlet, material mixing inlet, gas outlet, material outlet on the said material hopper. The material outlet of the said material mixing hopper connects with the material inlet of the said bottle flakes storage hopper and the automatic packing machine through material pipe,

Well selected, the quantity of the said material mixing hopper is at least two, with volume of more than 100 t/hopper. The material outlet of the said material mixing hopper connects with the packing machine through material pipe, the gas outlet of the mixing hopper connects with the cyclone separator through the gas pipe, at the bottom of the said cyclone separator is a dust bin.

On the other hand, the invention provides a process according to claim 6 for bottle flakes recycling and pelletizing, its characteristic being that using the said high-quality bottle flakes obtained via the present invention. With 3A grade bottle flakes, or the flakes after initial selection, crushing, washing and drying as raw material, makes the following steps for the recycled bottle flakes.
1) Sorting at certain quantity to remove the metal materials;
2) Sorting to remove the non-white PET flakes and non-PET label paper;
3) Pre-heating to remove surface moisture of the PET flakes;
4) Sieving out the tiny sand, so that the dust content is under 20 mg/Kg.
5) Heating and drying until the molecular inside moisture of the PET flakes is below 40 ppm.
6) Heating to a process temperature to melt into serum in melting state through the screw extruder.
7) Filtering the serum at the first time, and further increase the pressure to make the second filtration.
8) Making die head, cooling, and pelletizing to the serum after second filtration.
9) Drying the granular until the moisture content is below 1.5% and sorting to remove the cutting stock and dust.
10) After sorting, the granules are conveyed to multiple-hopper material mixing apparatus.
11) Uniformly mix the granules from different time inside the storage hopper.
12) Output the uniformly mixed granular from the storage container for packaging or downstream.

Further, the said step 5, the heating drying time is 23-25 hours.

Further, the process temperature in the said step 6 is 260-270°C, the second filtration accuracy of the said step 7 is 20 µm.

Further, in step 11, the material in the material mixing hopper, under the impact of the corresponding rotary valve and conveying blower, flow from the material outlet (505), through the material pipeline and material mixing outlet (503), into the material mixing hopper again, making sufficient mixing to the granules of different time to make the IV uniform.

Further, in step 11, when one mixing hopper is mixing the material, the other mixing hopper will receive and store the sieved granules.

The positive effect of the invention: with the 3A standard bottle flakes as raw material, removable of the metal, label, sand and other residues, and through melting and filtration remove the impurities in the raw material through the process of the eddy current separator, material sorter and pre-heating, remove the dust and purify the bottle flakes in the screw extruder to reduce the polyvinyl chloride (PVC) content from 90∼100 mg/Kg to 30 mg/Kg below, the dust content from 1900∼2000 mg/Kg to 50 mg/Kg, other impurities (sand, metal) content from 280~300 mg/Kg to 20 mg/Kg below. In this case, the product quality will improve a lot, then through multiple-hopper mixing apparatus, uniformly mix the chips or granule of different batches several times to get the uniform IV chips in this hopper and provide high quality chips for the downstream customers to improve the product stability and reliability of the downstream production. In spinning field, will reduce the possibility of the filament break and broken. In dyeing field, improve the uniformity and possibility of the dyeing. The filling capacity of each mixing hopper in the multiple-hopper material mixing apparatus is at least 100 t chips, then make multiple mixing and uniform IV output to provide stable quality and quantity products for the downstream.

The apparatus and process have the characteristic of high accuracy, and shield the shortcomings of the existing production system, such as high cost, low quality, low yield. The granule produced by the apparatus can be used to produce high quality products, even the food grade products.

### Explanation for the attached drawing

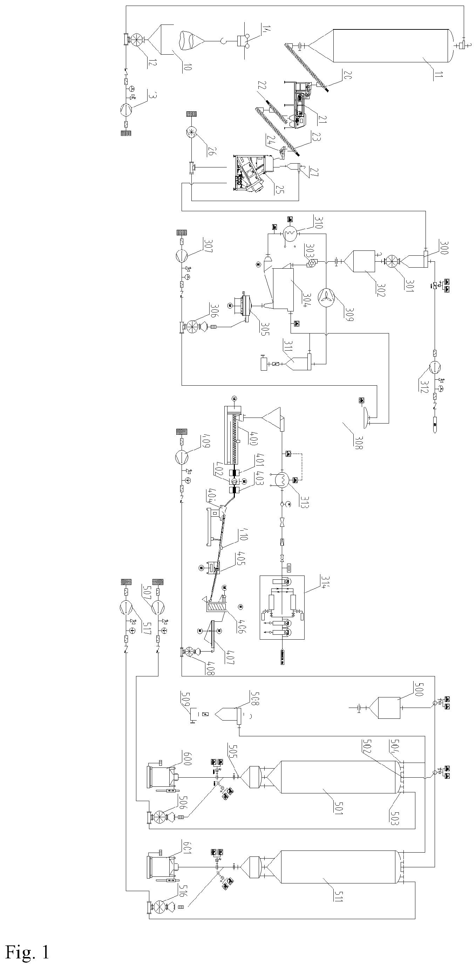

Figure 1 is indication drawing of the connecting relation of the apparatus in the invention.

In the drawing: bottle flakes feeding hopper-10, storage silo-11, the first rotary valve-12, the first conveying blower-13, crane-14,
the first spiral conveyor-20, eddy current separator-21, the second spiral conveyor-22, the third spiral conveyor-23, vibrating feeder-24, material sorter-25, the first centrifugal fan-26, feeding hopper-27, Vacuum hopper-300, the second rotary valve-301, middle hopper-302, the third rotary valve-303, fluid-bed-304, round vibrating sieve-305, the forth rotary valve-306, the second conveying blower-307, drying reaction tower-308, the second centrifugal fan-309, crystallizing heater-310, cyclone separator-311, vacuum blower-312, drying heater-313, high pressure dehumidifier-314, screw extruder-400, the first melt filter-401, pressure increase pump-402, the second melt filter-403, die head-404, pelletizer-105, dryer-406, direct vibrating sieve-407, the fifth rotary valve-408, the third conveying blower-409, sink-410, waste material hopper-500, the first hopper-501, material inlet of the mixing hopper-502, material mixing inlet of the mixing hopper-503, gas outlet of the mixing hopper-504, material outlet of the mixing hopper-505, the sixth rotary valve-506, the fourth conveying blower-507, cyclone separator-508, dust bin-509, the second mixing hopper-511, the seventh rotary valve-516, the fifth conveying blower-517, the first automatic packaging machine-600, the second automatic packaging machine-601.

### Concrete Implementing Scheme

The invention is now described by the intuitive attached Figure and some best examples.

Implement example: see the Figure 1, a high-quality apparatus and process for bottle flakes recycling and pelletizing. With the 3A grade bottle flakes as raw material, the said apparatus configurates bottle flake feeding apparatus, dust-removing and drying apparatus, screw extrusion pelletizing apparatus and multiple-hopper mixing apparatus, among which the bottle flakes feeding apparatus includes bottle flakes feeding hopper 10 and bottle flakes storage hopper 11. The material outlet of the bottle flakes feeding hopper connects with the material inlet of the bottle flakes storage hopper through material pipe. On the material pipe at the material outlet of the bottle flaks feeding hopper, there is the first rotary valve 12 and the first conveying blower 13.

The dust removing drying apparatus configures the eddy current separator 21 , material sorter 25, fluid bed 304, round vibrating sieve 305 and drying tower 308, among which at the material outlet of the bottle flakes storage hopper 11, there is the first spiral conveyor 20, eddy current sorter 21, the second spiral conveyer 22, the third spiral conveyor 23, the vibrating feeder 24, material sorter 25. The eddy current separator is TLFXP-14 model from Dongyan Tianli Electromaganetic-electric Equipment Co., Ltd. The sorter 25 is 6SXZ-300CL from HEFEI MEYER OPTOELECTRONIC TECHNOLOGY INC.

At the material outlet of the material sorter 25, through the material pipe, configures vacuum hopper 300, the second rotary valve 301, middle hopper 302, the third rotary valve 303, fluid bed 304, round vibrating sieve 305, the fourth rotary valve 306. The second conveying blower 307, drying reaction tower 308, high pressure dehumidifier 314, the second centrifugal fan 309 on the fluid bed 304, crystallizing heater 310, cyclone separator 311 connected by the material pipe in turn. The round vibrating sieve is on the material pipe between the material outlet of the fluid bed 304 and the fourth rotary valve 306. The round vibrating valve 305 adopts XF1500DE model manufactured by Xinxiang Pioneer Vibration Machinery Co., Ltd. The make of the high-pressure dehumidifier is TPE-650 model from Wuxi Topair Equipment Co., Ltd.

The screw extrusion pelletizing apparatus configurates screw extruder 400, the two-stage melt filter composed by the first melt filter 401, pressure increase pump 402 and the second melt filter 403, die head 404, sink 405, dyer 406, vibrating sieve 407. The material outlet of the pelletizer 405 connects with the material inlet of the dryer 406. The material outlet of the dryer 406 connects with the material inlet of the vibrating sieve 404. The material outlet of the vibrating sieve 407 connects with the waste material hopper 500 and multiple-hopper mixing apparatus by material pipe. On the material pipe of the material outlet of the vibrating sieve 407, there are the fifth rotary valve 408 and the third conveying blower 507. The screw extruder 400 is 0195 from Shanghai Jwell Chemical Fibre Machinery Co., Ltd. The two-stage melt filter is CPF-PT-15C from Zhejiang Yufeng Chemical Fibre Machinery Co., Ltd. The pelletizer 405 that consist of die head 404, sink 410, dryer 406 and vibrating sieve 407 adopts the TSQW200Z model from CAMA(LUOYANG) ELECTOMECHANIC CO., LTD.

Multiple-hopper material mixing apparatus includes material mixing hoppers which include the first material mixing hopper 501 and the second material mixing hopper 511. On the body of the first mixing hopper 501, configurate material inlet 505, mixing inlet 503, gas outlet 504. At the bottom, there is material outlet 505, mixing outlet 505 and mixing inlet 503. Through the connection between the sixth rotary valve 506 and the fourth conveying blower 507 by material pipe, the material outlet of the mixing hopper 505 connects with the first automatic packaging machine 600 by material pipe.

On the body of the first mixing hopper 511 configurates material inlet, mixing inlet, gas outlet and the material mixing outlet at the bottom of the mixing hopper. The material outlet of the mixing hopper connects with the material mixing inlet through the material pipe of the seventh rotary valve 516 and the fifth conveying blower 517. The material outlet of the second mixing hopper 511 connects with the second packaging 601 through the material pipe. The two packaging machines 600 and 601 are LPS-1000GF model from Li Gu Weighing Industrial Co., Ltd.

The material mixing inlet of the first mixing hopper 501 and the second mixing hopper 511 connects with the material outlet of the vibrating 407 through material pipe.

The gas outlet of the mixing hopper connects with the cyclone separator 508 through gas pipe. There is dust bin 509 at the bottom of the cyclone separator 508.

A process for bottle flakes recycling and pelletizing, with 3A grade bottle flakes, or the flakes after initial select, crush, wash and dry as raw material, make the following steps for the recycled bottle flakes.
1) Sorting at certain quantity to remove the metal materials;
2) Sorting to remove the non-white PET flakes and non-PET label paper;
3) Pre-heating to remove surface moisture of the PET flakes;
4) Sieving out the tiny sand, and the dust content is under 20 mg/Kg.
5) Heating and drying to remove the molecular inside moisture of the PET flakes to below 40 ppm.
6) Heating to process temperature to melt into serum in melting state through the screw extruder.
7) Filtering the serum at the first time, and further increase the pressure to make the second filtration.
8) Making die head, cooling, and pelletizing to the serum after second filtration.
9) Drying the granular until the moisture content below 1.5% and sort to remove the cutting stock and dust.
10) After sorting, the granules are conveyed to multiple-hopper material mixing apparatus.
11) Uniformly mix the granules from above step 10) from different times inside the storage hopper. In this step, the material in the material mixing hopper, under the impact of the corresponding rotary valve and conveying blower, flow from the material outlet (505), through the material pipeline and material mixing outlet (503), into the material mixing hopper again, making sufficient mixing to the granules of different time to make the IV uniform. When one mixing hopper is mixing the material, the other mixing hopper will receive and store the sieved granules.
12) Output the uniformly mixed granular from the storage container for packaging or downstream.

As per the attached Figure 1, the control for the process steps of the
apparatus as below:
The recycled the PET bottles from the town, after initial sorting, smash, wash and drying, become 3A grade standard bottle flakes, or directly recycle the 3A grade bottle flakes and transfer them into the feeding hopper 10 through truck 14. Through the first rotary valve 12 and the first conveying blower 13, the bottle flakes flow into the storage hopper 11 whose volume is 150 t/hopper. Then through the first spiral conveyor 20, the materials are conveyed to material inlet of the eddy current separator 21. Through the vibration the smooth material flow through the eddy current separator where the possible copper, aluminum, steel, and other metal material are separated.

After removing metals, the bottle flakes through the leading of the second spiral conveyor 22, flow into the third spiral conveyor 23 from where the material is fed to feeder 24 for vibration, then the smooth material flow into the material inlet of the material sorter 25. Inside the sorter 25, remove the non-PET label paper and non-white PET flakes. Then the sorted flakes enter the vacuum hopper 300, after the pre-heating of the fluid bed 304 to remove the surface moisture.

After that the flakes flow into the round vibrating sieve 305 by flakes gravity, inside the sieve 305, a small quantity of sand on the flakes surface is removed through vibration. After dust removing, the content of the metal, label, white PET flakes, sand and other impurities should be under 20 mg/Kg. And then through the fourth rotary valve 306 and the second conveying blower 307, the materials are transferred into the drying reaction tower 308 for heating and drying.

Inside the drying reaction tower 308, the flakes are heated by the heater 313 and high-pressure dehumidifier 314 and stay for 23-25 hours to make the moisture content below 40 ppm, then flow into the screw extruder 400. At the heating area of the screw extruder, the flakes are heated to process temperature 265°C and become melting status. Through the filtration of the first melt filter 401, pressure increase of the pump 402, the filtration of the second melt filter 403, the flakes flow into the die head, after cooling in the sink 410, pelletizing by the pelletizer 405, drying by the dryer 406 to achieve moisture content under 1.5%, which can avoid agglomeration due to too much moisture to make the vibrating sieve no function. After drying, enter into the vibrating sieve to remove the knife material and powder by the vibrating sieve 407, through the fifth rotary valve 408 and the third conveying blower 409, the flakes are conveyed to waste hopper 500 or the first mixing 501 and the second mixing hopper 511. The waste hopper 500 collect the non-standard material.

The first mixing hopper 501 and the second mixing hopper have the same volume of granule 100-200 t/hopper. The filling quantity of the first mixing hopper 501 and the second mixing hopper 511 is 150 t/hopper, when the first hopper is full, switches to the second hopper 511, at the same time, the first hopper with full material make circulating conveying through the sixth rotary valve 506 and the fourth conveying blower 507 to uniform the materials of different time to get uniform IV materials. After 3 times' mixing, the material flow into the first automatic packaging machine 600 for weighing and packaging. The packed granule or chips can be stored for sale or transfer to the downstream.

## Claims

1. A bottle flakes recycling and pelletizing apparatus, including a bottle flakes feeding apparatus and screw extrusion pelletizing apparatus with 3A grade bottle flakes as raw material, said 3A grade bottle flakes as defined in the description,
wherein between the bottle flakes feeding apparatus and screw extrusion pelletizing apparatus, a dust removing and drying apparatus is located,
wherein said dust removing and drying apparatus includes an eddy current separator (21),
**characterized in that** said dust removing and drying apparatus also includes a material sorter (25), a fluid-bed apparatus (304), a round vibrating sieve (305) and a drying tower (308), and **in that** the said screw extrusion pelletizing apparatus has a multiple-hopper material mixing apparatus at the output end.

2. Apparatus according to claim 1, wherein the said bottle flakes feeding apparatus includes a crane (14), a bottle flakes feeding hopper (10) and a bottle flakes storage hopper (11), the crane is on the upside of the bottle flakes feeding hopper (10), the material outlet of the said bottle flakes feeding hopper (10) connects with the material inlet of the said bottle flakes storage hopper (11) through a material pipe.

3. Apparatus according to claim 1, wherein the said screw extrusion pelletizing apparatus includes the screw extruder (400), a two-stage melt filter, a die head (404), a sink (410), a pelletizer (405), a dryer (406) and a vibrating sieve (407), the material outlet of the said screw extruder (400) connects with the material inlet of the said two stage melt filter, the material outlet of the said two-stage melt filter connects with the material inlet of the die head (404), the material inlet of the said die head (404) connects with the material inlet of the said pelletizer (405) through the said sink (410), the material outlet of the said pelletizer (405) connects with the material inlet of the dryer(406), the material outlet of the said dryer (406) connects with the material inlet of the said vibrating sieve (407), the material outlet of the said vibrating sieve (407) connects with the waste bin(500) and the said multiple-hopper mixing apparatus connects through said pipe.

4. Apparatus according to claim 1, wherein the said multiple-hopper mixing apparatus includes a mixing hopper, the said mixing hopper includes a material inlet (502), a mixing material inlet (503), a gas outlet (504) and a material outlet (505), the material outlet (505) of the said mixing hopper connects with the material inlet (503) of the said mixing hopper and the automatic packaging machine (600) connects through said material pipe.

5. Apparatus according to claim 4, wherein the number of the said material mixing hopper is at least two, with volume of more than 100t/hopper, the gas outlet (504) of the mixing hopper connects with the cyclone separator (508) through the gas pipe, at the bottom of the said cyclone separator (508) is a dust bin (509).

6. A process for bottle flakes recycling and pelletizing, using an apparatus according to any of claims 1 to 5, with 3A grade bottle flakes, or with flakes after initial select, crush, wash and dry as raw material, comprising the following steps:
1) Sorting the 3A grade bottle flakes, or the flakes after initial select, crush, wash and dry at a certain quantity, to remove the metal materials from it;
2) Sorting the flakes obtained from the above step 1), to remove the non-white PET flakes and non-PET label paper from it;
3) Pre-heating the flakes obtained from the above step 2), to remove surface moisture of the PET flakes from it;
4) Sieving out the tiny sand of the flakes obtained from the above step 3), to achieve a dust content of the flakes of under 20 mg/Kg;
5) Heating and drying the flakes obtained from the above step 4), to remove the molecular inside moisture of the PET flakes to below 40 ppm;
6) Heating the flakes obtained from the above step 5) to process temperature, to melt the flakes into serum in melting state through the screw extruder;
7) Filtering the serum from the above step 6) a first time, and further increasing the pressure to make the second filtration;
8) Using the die head to make the flakes into a die/dies, cooling, and granulating to the serum of the after second filtration from the above step 7);
9) Drying the granular from the above step 8) until the moisture content is below 1.5%, and sorting to remove the cutting stock and dust from it;
10) After sorting of the granules from the above step 9), then the granules conveying to multiple-hopper material mixing apparatus;
11) Uniformly mixing the granules from the above step 10) from different times inside the storage hopper, the material in the material mixing hopper, under the impact of the corresponding rotary valve and conveying blower, flow from the material outlet, through the material pipeline and material mixing outlet, into the material mixing hopper again, making sufficient mixing to the granules of different time to make the IV uniform;
12) Outputting the uniformly mixed granular of the granules from the above step 11) from the storage hopper material mixing apparatus for packaging or downstream application.

7. Process according to claim 6, wherein the heating time in said step 5 is 23-25 hours.

8. Process according to claim 6 wherein the process temperature in step 6 is 260-270°C, the second filtration accuracy of the said step 7 being 20 µm.

## Patentansprüche

1. Flaschenmahlgut-Recycling- und -Granuliervorrichtung, umfassend eine Flaschenmahlgut-Zuführungsvorrichtung und Schneckenextrusionsgranuliervorrichtung mit Flaschenmahlgut der Qualität 3A als Rohstoff, wobei das Flaschenmahlgut der Qualität 3A wie in der Beschreibung definiert ist, wobei sich zwischen der Flaschenmahlgut-Zuführungsvorrichtung und der Schneckenextrusionsgranuliervorrichtung eine Staubentfernungs- und Trocknungsvorrichtung befindet, wobei die Staubentfernungs- und Trocknungsvorrichtung einen Wirbelstromabscheider (21) umfasst, **dadurch gekennzeichnet, dass** die Staubentfernungs- und Trocknungsvorrichtung auch einen Materialsortierer (25), eine Wirbelschichtvorrichtung (304), ein Rundschüttelsieb (305) und einen Trocknungsturm (308) umfasst, und dadurch, dass die Schneckenextrusionsgranuliervorrichtung am Ausgabeende eine Mehrfachtrichter-Materialmischvorrichtung aufweist.

2. Vorrichtung gemäß Anspruch 1, wobei die Flaschenmahlgut-Zuführungsvorrichtung einen Kran (14), einen Flaschenmahlgut-Zuführungstrichter (10) und einen Flaschenmahlgut-Vorratstrichter (11) umfasst, sich der Kran auf der Oberseite des Flaschenmahlgut-Zuführungstrichters (10) befindet, der Materialauslass des Flaschenmahlgut-Zuführungstrichters (10) über ein Materialrohr an den Materialeinlass des Flaschenmahlgut-Vorratstrichters (11) angeschlossen ist.

3. Vorrichtung gemäß Anspruch 1, wobei die Schneckenextrusionsgranuliervorrichtung den Schneckenextruder (400), einen zweistufigen Schmelzfilter, einen Extruderkopf (404), einen Abfluss (410), einen Granulierer (405), einen Trockner (406) und ein Schüttelsieb (407) umfasst, der Materialauslass des Schneckenextruders (400) an den Materialeinlass des zweistufigen Schmelzfilters angeschlossen ist, der Materialauslass des zweistufigen Schmelzfilters an den Materialeinlass des Extruderkopfs (404) angeschlossen ist, der Materialeinlass des Extruderkopfs (404) über den Abfluss (410) an den Materialeinlass des Granulierers (405) angeschlossen ist, der Materialauslass des Granulierers (405) an den Materialeinlass des Trockners (406) angeschlossen ist, der Materialauslass des Trockners (406) an den Materialeinlass des Schüttelsiebs (407) angeschlossen ist, der Materialauslass des Schüttelsiebs (407) über das Rohr an den Müllbehälter (500) und die Mehrfachtrichter-Mischvorrichtung angeschlossen ist.

4. Vorrichtung gemäß Anspruch 1, wobei die Mehrfachtrichter-Mischvorrichtung einen Mischtrichter umfasst, der Mischtrichter einen Materialeinlass (502), einen Mischmaterialeinlass (503), einen Gasauslass (504) und einen Materialauslass (505) umfasst, der Materialauslass (505) des Mischtrichters über das Materialrohr an den Materialeinlass (503) des Mischtrichters und die automatische Verpackungsmaschine (600) angeschlossen ist.

5. Vorrichtung gemäß Anspruch 4, wobei die Anzahl der Materialmischtrichter wenigstens zwei beträgt, mit einem Volumen von mehr als 100 tfTrichter, der Gasauslass (504) des Mischtrichters über das Gasrohr an den Fliehkraftabscheider (508) angeschlossen ist und sich am Boden des Fliehkraftabscheiders (508) ein Staubbehälter (509) befindet.

6. Verfahren zum Recyceln und Granulieren von Flaschenmahlgut unter Verwendung einer Vorrichtung gemäß einem der Ansprüche 1 bis 5 mit Flaschenmahlgut der Qualität 3A oder mit Mahlgut nach anfänglichem Selektieren, Zerkleinern, Waschen und Trocknen als Rohstoff, umfassend die folgenden Schritte:
1) Sortieren des Flaschenmahlguts der Qualität 3A oder des Mahlguts nach anfänglichem Selektieren, Zerkleinern, Waschen und Trocknen in einer bestimmten Menge, um die Metallmaterialien daraus zu entfernen;
2) Sortieren des im obigen Schritt 1) erhaltenen Mahlguts, um das nichtweiße PET-Mahlgut und Nicht-PET-Etikettenpapier daraus zu entfernen;
3) Vorerhitzen des im obigen Schritt 2) erhaltenen Mahlguts, um Oberflächenfeuchtigkeit des PET-Mahlguts daraus zu entfernen;
4) Aussieben der winzigen Sandkörner aus dem im obigen Schritt 3) erhaltenen Mahlgut, um einen Staubgehalt des Mahlguts von unter 20 mg/kg zu erreichen;
5) Erhitzen und Trocknen des im obigen Schritt 4) erhaltenen Mahlguts, um die molekulare innere Feuchtigkeit des PET-Mahlguts auf unter 40 ppm zu entfernen;
6) Erhitzen des im obigen Schritt 5) erhaltenen Mahlguts auf Verfahrenstemperatur, um das Mahlgut durch den Schneckenextruder zu einer klaren Schmelze zu verarbeiten;
7) erstmaliges Filtrieren der klaren Schmelze aus dem obigen Schritt 6) und weiterhin Erhöhen des Drucks, um die zweite Filtration durchzuführen;
8) Verwenden des Extruderkopfs, um das Mahlgut zu einem Extrudat zu verarbeiten, Abkühlen und Granulieren der klaren Schmelze nach der zweiten Filtration aus dem obigen Schritt 7);
9) Trocknen des Granulats aus dem obigen Schritt 8), bis der Feuchtigkeitsgehalt unter 1,5% liegt, und Sortieren, um das Schneidgut und den Staub daraus zu entfernen;
10) nach dem Aussortieren des Granulats aus dem obigen Schritt 9): Transportieren des Granulats zur Mehrfachtrichter-Materialmischvorrichtung;
11) gleichmäßiges Mischen der Granulate aus dem obigen Schritt 10) von unterschiedlichen Zeitpunkten innerhalb des Vorratstrichters, wobei das Material in dem Materialmischtrichter unter dem Einfluss des entsprechenden Drehventils und Fördergebläses aus dem Materialauslass durch die Materialleitung und den Materialmischauslass zurück in den Materialmischtrichter fließt, was ein ausreichendes Mischen der Granulate von unterschiedlichen Zeitpunkten gewährleistet, so dass die IV gleichmäßig wird;
12) Ausgeben des gleichmäßig gemischten Granulats aus den Granulaten aus dem obigen Schritt 11) aus der Vorratstrichtermaterial-Mischvorrichtung zum Verpacken oder für nachgeschaltete Anwendungen.

7. Verfahren gemäß Anspruch 6, wobei die Zeit des Erhitzens in Schritt 5) 23-25 Stunden beträgt.

8. Verfahren gemäß Anspruch 6, wobei die Verfahrenstemperatur in Schritt 6 260-270°C beträgt, wobei die Genauigkeit der zweiten Filtration in Schritt 7 20 µm beträgt.

## Revendications

1. Dispositif de recyclage et de granulation de flocons de bouteille, comprenant un dispositif d'alimentation de flocons de bouteille, et un dispositif de granulation d'extrusion à vis, avec des flocons de bouteille de sorte 3A comme matériau primaire, lesdits flocons de bouteille de sorte 3A sont tels que définis dans la description, dans lequel un dispositif d'élimination de poussière et de séchage est situé entre ledit dispositif d'alimentation de flocons de bouteille et ledit dispositif de granulation d'extrusion à vis, dans lequel ledit dispositif d'élimination de poussière et de séchage comprend un séparateur à courants de Foucault (21), **caractérisé en ce que** ledit dispositif d'élimination de poussière et de séchage comprend en outre un trieur de matériaux (25), un dispositif de lit fluidisé (304), un tamis rond secoué (305), et une tour de séchage (308), et **en ce que** ledit dispositif de granulation d'extrusion à vis présente un dispositif de mélange de matériaux à multiple trémies à l'extrémité de délivrance.

2. Dispositif selon la revendication 1, dans lequel ledit dispositif d'alimentation de flocons de bouteille comprend un grue (14), une trémie d'alimentation de flocons de bouteille (10), et une trémie de stockage de flocons de bouteille (11), ledit grue est sur le côté supérieur de ladite trémie d'alimentation de flocons de bouteille (10), la sortie de matériau de ladite trémie d'alimentation de flocons de bouteille (10) est connectée avec l'entrée de matériau de ladite trémie de stockage de flocons de bouteille (11) au moyen d'un tuyau de matériau.

3. Dispositif selon la revendication 1, dans lequel ledit dispositif de granulation d'extrusion à vis comprend l'extrudeuse à vis (400), un filtre de fonte à deux étapes, une tête d'extrusion (404), un écoulement (410), un granulateur (405), un sécheur (406), et un tamis secoué (407), ladite sortie de matériau de ladite extrudeuse à vis (400) est connectée avec l'entrée de matériau dudit filtre de fonte à deux étapes, ladite sortie de matériau dudit filtre de fonte à deux étapes est connectée avec l'entrée de matériau de ladite tête d'extrusion (404), ladite entrée de matériau de ladite tête d'extrusion (404) est connectée avec l'entrée de matériau dudit granulateur (405) au moyen dudit écoulement (410), ladite sortie de matériau dudit granulateur (405) est connectée avec l'entrée de matériau dudit sécheur (406), ladite sortie de matériau dudit sécheur (406) est connectée avec l'entrée de matériau dudit tamis secoué (407), ladite sortie de matériau dudit tamis secoué (407) est connectée avec la poubelle (500), et ledit dispositif de mélange à multiple trémies est connecté à travers ledit tuyau.

4. Dispositif selon la revendication 1, dans lequel ledit dispositif de mélange à multiple trémies comprend une trémie de mélange, ladite trémie de mélange comprend une entrée de matériau (502), une entrée de matériau à mélanger (503), une sortie de gaz (504), et une sortie de matériau (505), ladite sortie de matériau (505) de ladite trémie de mélange est connectée avec ladite entrée de matériau (503) de ladite trémie de mélange, et la machine de conditionnement automatique (600) est connectée au moyen dudit tuyau de matériau.

5. Dispositif selon la revendication 4, dans lequel le nombre desdites trémies de mélange de matériaux est au moins deux, avec un volume de plus de 100 t/trémie, ladite sortie de gaz (504) de la trémie de mélange est connectée avec le séparateur cyclone (508) au moyen du tuyau de gaz, et seau à ordures (509) est situé au fond dudit séparateur cyclone (508).

6. Procédé pour le recyclage et la granulation de flocons de bouteille, en utilisant un dispositif selon l'une quelconque des revendications 1 à 5, avec des flocons de bouteille de sorte 3A, ou avec des flocons après sélection initiale, broyage, lavage, et séchage, comme matériau primaire, comprenant les étapes suivantes consistant à :
1) trier lesdits flocons de bouteille de sorte 3A, ou lesdits flocons après sélection initiale, broyage, lavage, et séchage, à une certaine quantité, pour en éliminer les matériaux métalliques,
2) trier lesdits flocons obtenus dans l'étape 1) dessus, pour en éliminer les flocons de PET non blancs et le papier pour étiquettes non-PET,
3) préchauffer les flocons obtenus dans l'étape 2) dessus, pour en éliminer l'humidité de surface des flocons de PET,
4) tamiser le sable à petits grains des flocons obtenus dans l'étape 3) dessus, pour atteindre une teneur de poussière des flocons de moins de 20 mg/kg,
5) chauffer et sécher les flocons obtenus dans l'étape 4) dessus, pour éliminer l'humidité intérieure moléculaire des flocons de PET à moins de 40 ppm,
6) chauffer les flocons obtenus dans l'étape 5) dessus à la température du processus, pour fondre les flocons en une fonte claire par l'extrudeuse à vis,
7) filtrer la fonte claire de l'étape 6) dessus une première fois, et augmenter en outre la pression pour effectuer une deuxième filtration,
8) utiliser la tête d'extrusion pour transformer les flocons en extrudât, refroidir, et granuler à la fonte claire obtenue après la deuxième filtration de l'étape 7) dessus,
9) sécher le granulé obtenu dans l'étape 8) dessus, jusqu'à ce que la teneur en humidité soit moins de 1,5 %, et trier pour en éliminer les coupures et la poussière,
10) après le triage des granulés dans l'étape 9) dessus, ensuite transporter les granulés au dispositif de mélange de matériaux à multiple trémies,
11) mélanger uniformément les granulés de l'étape 10) dessus provenant de temps différents au sein de la trémie de stockage, le matériau dans la trémie de mélange de matériaux, sous l'effet de la soupape rotative correspondante et un ventilateur de transport, s'écoule à partir de la sortie de matériau par la conduite de matériau et la sortie de mélange de matériau, à nouveau dans la trémie de mélange de matériaux, effectuer un mélange suffisant avec les granulés provenant de temps différents pour faire la viscosité intrinsèque uniforme,
12) délivrer le granulé mélangé uniformément des granulés de l'étape 11) dessus à partir du dispositif de mélange de matériaux des trémies de stockage, pour emballage ou une application en aval.

7. Procédé selon la revendication 6, dans lequel le temps du chauffage dans cette étape 5 est de 23-25 heures.

8. Procédé selon la revendication 6, dans lequel la température du processus dans l'étape 6 est de 260-270°C, la précision de la deuxième filtration de ladite étape 7 étant 20 µm.
